Europäisches Patentamt

European Patent Office

Office européen des brevets

(11) Veröffentlichungsnummer: **0 179 187**
**A2**

(12) **EUROPÄISCHE PATENTANMELDUNG**

(21) Anmeldenummer: 85104774.6

(22) Anmeldetag: 19.04.85

(51) Int. Cl.⁴: **G 02 C 5/12**

(30) Priorität: 26.10.84 DE 3439299

(43) Veröffentlichungstag der Anmeldung:
30.04.86 Patentblatt 86/18

(84) Benannte Vertragsstaaten:
AT BE CH DE FR GB IT LI LU NL SE

(71) Anmelder: Simro AG
Juststrasse 26
CH-8706 Meilen(CH)

(72) Erfinder: Czech, Günther
Heinrich-Hertz-Strasse 4/1
D-7024 Filderstadt 4(DE)

(74) Vertreter: Grams, Klaus Dieter, Dipl.-Ing. et al,
Patentanwaltsbüro Tiedtke-Bühling-Kinne-
Grupe-Pellmann-Grams-Struif Bavariaring 4
D-8000 München 2(DE)

(54) Brillensteg.

(57) Es wird ein Brillensteg aus thermoplastischem Polyurethan oder einem thermoplastischen Polyäther-Block-Amid
beschrieben.

Fig. 1

EP 0 179 187 A2

**TIEDTKE - BÜHLING - KINNE - GRUPE**
**PELLMANN - GRAMS - STRUIF**

**Patentanwälte** und
**Vertreter beim EPA**

Dipl.-Chem. Dr. B. Struif

**Bavariaring 4, Postfach 2024 (**
**8000 München 2**
Tel.: 089 - 53 96 53
Telex: 5-24 845 tipat
Telecopier: 0 89 - 537377
cable: Germaniapatent Münch(

0179187

— 1 —

19. April 1985
EP 4788

Simro AG
Meilen, Schweiz

Brillensteg

Die Erfindung betrifft einen Brillensteg gemäß Oberbegriff
von Patentanspruch 1.

Brillenstege aus Kunststoff sind bekannt. Solche Kunststoffe müssen alterungsbeständig, hautverträglich, schweißbeständig, gegen UV-Strahlen beständig, witterungsbeständig
und im Tragen abriebfest sein. Daneben sollte der Kunststoff möglichst transparent sein und in jeder gewünschten
Farbe eingefärbt werden können. Ferner sollte der Steg
leicht in Massenproduktion gefertigt werden können.

Aus der DE-PS 25 45 683 ist ein Seitenstegplättchen bzw.
ein Pad bekannt, das aus einem homogenen, kautschukelastischen Kunststoff mit einer Shore-D-Härte von 10 bis 30,
gemessen nach DIN 53505, hergestellt ist, wobei das Plättchenvolumen so groß sein soll, daß die Abstützteile des
Plättchens nicht auf der Haut druckwirksam werden. Ein be-

Dresdner Bank (München) Kto 3939844     Deutsche Bank (München) Kto. 286 1060     Postscheckamt (München) Kto. 670-43-804

vorzugter Bereich der Shore-D-Härte des Kunststoffes liegt bei 10 bis 20. Als Kunststoff ist Weich-PVC genannt, das unter dem Handelsnamen Vestolid von der Firma Chemische Werke Hüls vertrieben wird.

Kunststoffe mit einer Shore-D-Härte von 10 bis 30, gemessen nach DIN 53505, sind auch Silikonkautschuke, wie sie für Seitenstegplättchen beispielsweise in den DE-GM 82 36 632, DE-OS 27 39 905 und DE-OS 27 38 777 beschrieben sind.

Die niedrige Shore-D-Härte der bekannten Kunststoffe bedingt eine hohe Weichheit, so daß ein erhebliches Plättchenvolumen benötigt wird, um dem Plättchen eine ausreichende Formstabilität zu verleihen und um zu verhindern, daß die Stegstütze auf der Haut druckwirksam wird. Daher sind die bekannten Stege relativ voluminös und können vom optischen Standpunkt noch nicht vollständig befriedigen.

Demgemäß liegt der vorliegenden Erfindung die Aufgabe zugrunde, den im Oberbegriff von Patentanspruch 1 beschriebenen Brillensteg in der Weise zu verbessern, daß er neben den vorstehend erwähnten Eigenschaften ein möglichst geringes Stegvolumen aufweist und er auch in ästhetischer Hinsicht voll befriedigt.

Diese Aufgabe wird mit den im kennzeichnenden Teil vom Patentanspruch 1 beschriebenen Kunststoffen gelöst.

Die erfindungsgemäß eingesetzten thermoplastischen Polyäther-Block-Amide und Polyurethane haben gute Alterungsbeständigkeit, Schweißbeständigkeit, UV-Strahlen-Beständigkeit, Witterungsbeständigkeit und Hautverträglichkeit und sind beim Tragen abriebfest. Diese Kunststoffe sind hochtransparent, können in einer gewünschten Farbe eingefärbt werden und lassen sich leicht durch Spritzgießen verarbeiten.

Durch Einstellung einer Shore-D-Härte im Bereich von 32 bis 55, vorzugsweise 32 bis 45, gemessen nach DIN 53505, kann das Stegvolumen kleingehalten werden, ohne daß die Formstabilität und die Elastizität des Steges verloren geht und ohne daß die Stegstütze auf der Haut druckwirksam wird. Die Seitenstegplättchen oder der Sattelsteg können daher im Nasenauflagebereich besonders dünn ausgebildet werden, so daß der Steg einen hohen Tragekomfort ermöglicht und auch in ästhetischer Hinsicht voll befriedigt.

Geeignete Polyurethankunststoffe sind unter dem Warenzeichen Desmopan im Handel und werden von der Firma Bayer AG geliefert. Besonders geeignete Kunststoffe sind das Polyurethan Desmopan Nr. 786 und PU 0149.

Geeignete Polyäther-Block-Amide werden unter dem Warenzeichen Pebax von der Firma Atochem vertrieben. Bevorzugt sind folgende Pebaxtypen: Nr. 5533 SN 00, 4033 SN 00, 3533 SN 00, 5533 SN 70, 4033 SN 70, 5533 SD 00, 4033 SD 00, 3533 SD 00, 5512 MN 00, 5562 MN 00, 4011 RN 00.

Beide Kunststofftypen lassen sich leicht spritzgießen. Hierbei können übliche Spritzgießmaschinen verwendet werden. Die erfindungsgemäß verwendeten Kunststoffe bieten daher verarbeitungstechnische Vorteile gegenüber den bekannten Silikonkautschuken, die während der Verarbeitung noch vernetzt werden müssen. Zum Spritzgießen von Silikonkautschuken werden zwei Komponenten, die einerseits einen Katalysator und andererseits einen Vernetzer enthalten, bei Raumtemperatur in der Spritzgießmaschine vermischt, ohne daß eine Vernetzung eintritt. Erst in der eigentlichen Spritzform werden die Komponenten auf Vernetzungstemperatur gebracht. Daher benötigen spritzgießbare Silikonkautschuke spezielle Einrichtungen in herkömmlichen Verarbeitungsmaschinen.

Der Brillensteg läßt sich oberflächenbeschichten und er kann in einer gewünschten Farbe eingefärbt werden. Hingegen sind Silikongummis milchig trüb, schlecht beschichtbar und können auch nur unbefriedigend eingefärbt werden.

- 4 -

**0179187**

Gemäß einer bevorzugten Ausführungsform wird das Stegvolumen so groß gewählt, daß die Stegstütze nicht auf der Nasenoberfläche druckwirksam wird. Die Dicke des Steges im überwiegenden Bereich der Nasenauflagefläche beträgt hierbei weniger als 1,5 mm, vorzugsweise weniger als 1,0 mm.

Weitere Ausführungsformen werden anhand der Beispiele näher erläutert:

Figur 1 zeigt ein Seitenstegplättchen mit beweglich angebrachter Seitenstegstütze.

Fig. 2 zeigt einen Sattelsteg mit Stegstütze.

Fig. 3 zeigt ein Seitenstegplättchen mit einer fest verbundenen Seitenstegstütze.

Fig. 4 zeigt einen Querschnitt durch einen Steg gemäß Fig. 2 und 3 im Bereich der Seitenstegstütze (Schnitt A-B in Fig. 3)

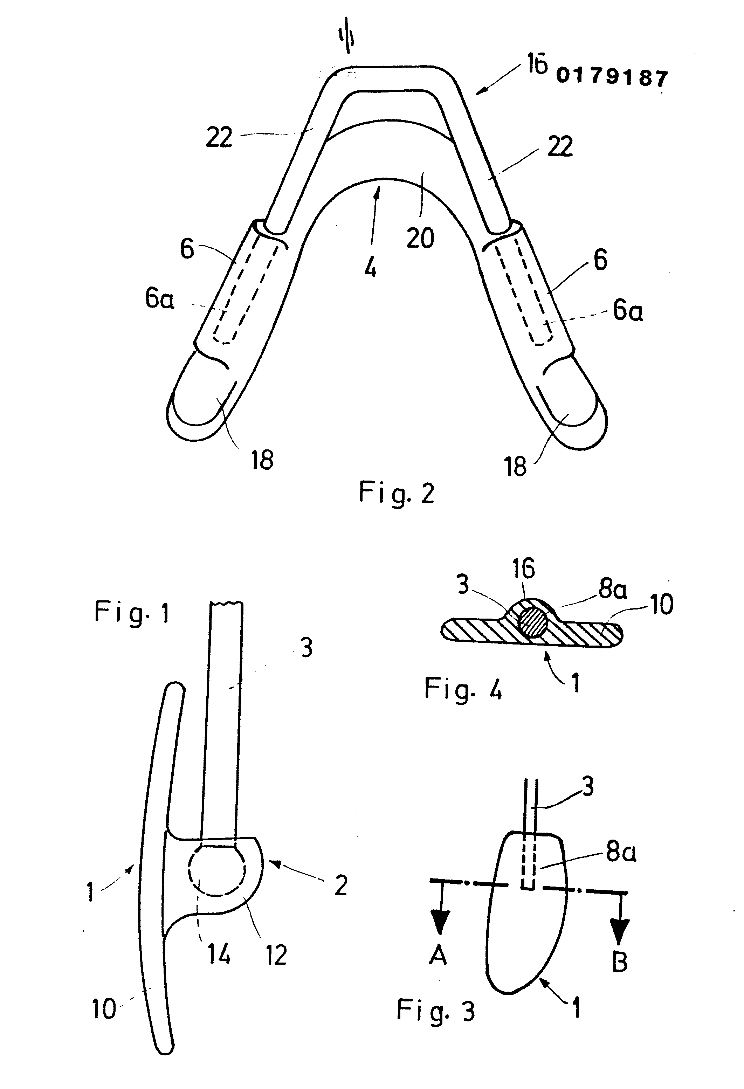

In Fig. 1 ist Seitenstegplättchen 1 in Seitenansicht gezeigt. Das Seitenstegplättchen besteht aus einer leicht eingewölbten, plattenförmigen Abschnitt 10 mit einer im wesentlichen eiförmigen bzw. ovalen Umrißlinie, wie Fig. 3 erkennen läßt. Die Vorderseite des Abschnitts 10, die in Fig. 1 links angeordnet ist, dient als Anlagefläche des Seitenstegplättchens, mit der das Seitenstegplättchen an einer nicht dargestellten Nasenflanke zur Anlage kommen kann. Auf der Rückseite des Abschnitts 10 ist eine Kugelpfanne 12 angeformt, die zusammen mit einer in die Kugelpfanne eingesetzten Kugel 14 ein Kugelgelenk 2 bildet, mittels dessen das Seitenstegplättchen 1 mit einer stabförmigen Seitenstegstütze 3 verbunden ist. Das Seitenstegplättchen ist durch Spritzgießen aus einem thermoplastischen Polyurethan oder einem thermoplastischen Polyäther-Block-Amid gefertigt. Die Seitenstegstütze 3 besteht aus Kunststoff oder Metall. Nach dem Zusammenfügen der Seitenstegstütze 3 mit dem Seitenstegplättchen 1 kann das Kugelgelenk 2 beispielsweise mittels eines Klebers versteift sein.

Wie Fig. 1 erkennen läßt, hat der plattenförmige Abschnitt 10 des Seitenstegplättchens 1 eine verhältnismäßig geringe Dicke, und aufgrund seiner Ausbildung aus einem der beiden genannten bestimmten Kunststoffe reicht seine mechanische Festigkeit und Steifigkeit dennoch aus, wobei es zugleich hinreichend weich und nachgiebig ist, um bequem auf der Nasenflanke aufzusitzen.

Die Figuren 3 und 4 zeigen eine Abwandlung des Seitenstegplättchens gemäß Fig. 1, wobei der Unterschied zur Ausführungsform gemäß Fig.1 darin besteht, daß die Seitenstegstütze 3 nicht mittels eines Kugelgelenks mit dem Seitenstegplättchen 1 verbunden ist, sondern in eine in Richtung der Längsachse des Abschnitts 10 verlaufende Ausnehmung 8a mit ihrem unteren Ende eingesteckt ist. In der Ausnehmung 8a ist das untere Ende der Seitenstegstütze 3 stoff- und/oder formschlüssig befestigt. Da der Abschnitt 10 aufgrund seiner besonderen stofflichen Zusammensetzung eine verhältnismäßig geringe Dicke hat, weist er auf seiner Rückseite einen länglichen Vorsprung 16 auf, durch den der zur Ausbildung der Ausnehmung 8a erforderliche Raum geschaffen ist. Wie insbesondere Fig. 4 erkennen läßt, ist der Abstand zwischen der Seitenstegstütze 3 und der in Fig. 4 unten angeordneten Vorderseite des Seitenstegplättchens 1 verhältnismäßig gering. Dennoch kommt es aufgrund des für die Herstellung des Seitenstegplättchens 1 verwendeten Kunststoffs nicht zu einer störenden Druckerhöhung im Bereich der Seitenstegstütze 3.

Fig. 2 zeigt in Vorderansicht als Ausführungsbeispiel einen Sattelsteg 4 mit einer zugeordneten Stegstütze 16. Der Sattelsteg 4 weist zwei plattenförmige seitliche Abschnitte 18 auf, deren Form ungefähr der eines Seitenstegplättchens entspricht und die durch einen mittleren Abschnitt 20 miteinander verbunden sind. Die in Fig. 2 nicht sichtbaren Vorderseiten der drei Abschnitte 18 und 20 sind zur Auflage auf den Nasenflanken bzw. dem Nasenrücken eines Brillenträgers bestimmt. Auf den in Fig. 2 sichtbaren Rückseiten der beiden Abschnitte 18 ist jeweils ein länglicher Vorsprung 6 ausgebildet, der ähnlich wie der Vorsprung 16 der Ausführungsform gemäß den Fig. 3 und 4 mit einer Längsbohrung 6a versehen ist, in die das untere Ende eines stabförmigen Schenkels 22 der U-förmigen Stegstütze 16 eingesteckt ist.

Der Sattelsteg 4 ist durch Spritzformen aus einem thermoplastischen Polyurethan oder einem thermoplastischen Polyäther-Block-Amid gefertigt, und er hat daher die bereits einleitend und bei der Erläuterung der Seitenstegplättchen 1 genannten Eigenschaften und Vorteile. Die Stegstütze besteht aus Kunststoff oder Metall und ist an ihrem unteren Ende in den Längsbohrungen 6a beispielsweise verklebt oder verrastet.

Trotz der verhältnismäßig geringen Dicke der Abschnitte 18 wird die Stegstütze auf der Haut nicht druckwirksam, wobei jedoch der Sattelsteg 4 so weich ist, daß er sehr bequem auf der Haut aufliegt. Die dünnwandige und kleinvolumige Ausbildung des Sattelsteges 4 und auch des Seitenstegplättchens 1 ist vom ästhetischen Gesichtspunkt sehr erwünscht.

Patentanwälte und
Vertreter beim EPA
Dipl. Ing. H. Tiedtke

0179187

Bavariaring 4, Postfach 20
8000 München 2
Tel.: 089 - 53 96 53
Telex: 5-24 845 tipat
Telecopier: 0 89 - 537377
cable: Germaniapatent Mü

- 8 -

Patentansprüche

1. Brillensteg aus Kunststoff, insbesondere in Form eines
Seitensteges oder eines Sattelsteges, dadurch gekennzeichnet, daß der Kunststoff ein thermoplastisches Polyurethan
oder ein thermoplastisches Polyäther-Block-Amid ist.

2. Brillensteg nach Anspruch 1, dadurch gekennzeichnet,
daß der Kunststoff eine Shore D Härte, gemessen nach DIN
53505 von 32 bis 55, vorzugsweise 32 bis 45 aufweist.

3. Brillensteg nach Anspruch 1 oder 2, dadurch gekennzeichnet, daß der Kunststoff das Polyurethan Desmopan
(Warenzeichen) Nr. 786 und PU 0149 der Firma Bayer AG
ist.

4. Brillensteg nach Anspruch 1 oder 2, dadurch gekennzeichnet, daß der Kunststoff das Polyäther-Block-Amid
(PEBA) Pebax (Warenzeichen) Nr. 5533 SN 00, 4033 SN 00,
3533 SN 00, 5533 SN 70, 4033 SN 70, 5533 SD 00, 4033 SD
00, 3533 SD 00, 5512 MN 00, 5562 MN 00, 4011 RN 00 der
Firma Atochem ist.

Dresdner Bank (München) Kto 3939 844      Deutsche Bank (München) Kto 286 1060      Postscheckamt (München) Kto. 670-43-804

5. Brillensteg nach einem der vorhergehenden Ansprüche, dadurch gekennzeichnet, daß der Brillensteg (1, 4) spritzgeformt ist.

6. Brillensteg nach einem der vorhergehenden Ansprüche, dadurch gekennzeichnet, daß der Brillensteg (1, 4) oberflächenbeschichtet und/oder eingefärbt ist.

7. Brillensteg nach einem der vorhergehenden Ansprüche, dadurch gekennzeichnet, daß das Stegvolumen so groß gewählt wird, daß die Stegstütze (3, 16) nicht auf der Nasenoberfläche druckwirksam ist.

8. Brillensteg nach einem der vorhergehenden Ansprüche, dadurch gekennzeichnet, daß die Dicke des Brillensteges (10) im überwiegenden Bereich der Nasenauflagefläche weniger als 1,5 mm vorzugsweise weniger als 1,0 mm beträgt.

9. Brillensteg nach einem der vorhergehenden Ansprüche, dadurch gekennzeichnet, daß eine Stegstütze (3, 16) in einer Ausnehmung (6a, 8a) in dem Sattelsteg (4) oder in dem Seitenstegplättchen (1) eingepaßt ist.

10. Brillensteg nach einem der vorhergehenden Ansprüche, dadurch gekennzeichnet, daß der Sattelsteg (4) Vorsprünge (6) mit Längsbohrungen (6a) aufweist, in die die Stegstütze (4) eingepaßt ist.

11. Brillensteg nach einem der vorhergehenden Ansprüche, dadurch gekennzeichnet, daß das Seitenstegplättchen (1) bzw. der Sattelsteg (4) fest mit der Stegstütze (3, 16) verbunden ist.

12. Brillensteg nach einem der vorhergehenden Ansprüche, dadurch gekennzeichnet, daß das Seitenstegplättchen (1) bzw. der Sattelsteg (4) über ein Gelenk (2) mit einer Seitenstütze (3) verbunden ist.

Fig. 2

Fig. 1

Fig. 4

Fig. 3

0179187